(19) Europäisches Patentamt
European Patent Office
Office européen des brevets

(11) **EP 4 742 416 A1**

(12) **EUROPEAN PATENT APPLICATION**

(43) Date of publication:
**13.05.2026 Bulletin 2026/20**

(21) Application number: **25210266.0**

(22) Date of filing: **22.10.2025**

(51) International Patent Classification (IPC):
***H01M 50/443*** *(2021.01)* ***H01M 50/451*** *(2021.01)*
***H01M 50/46*** *(2021.01)* ***H01M 50/489*** *(2021.01)*

(52) Cooperative Patent Classification (CPC):
**H01M 50/451; H01M 50/443; H01M 50/461; H01M 50/489**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **07.11.2024 KR 20240156730**

(71) Applicants:
- **SK Innovation Co., Ltd.**
  **Seoul 03188 (KR)**
- **SK IE Technology Co., Ltd.**
  **Seoul 03188 (KR)**

(72) Inventors:
- **KIM, Dong Jae**
  **03188 Seoul (KR)**
- **YUN, Cheol Min**
  **03188 Seoul (KR)**
- **JANG, Dong Il**
  **34124 Daejeon (KR)**
- **LEE, Soon Bo**
  **34124 Daejeon (KR)**

(74) Representative: **Prüfer & Partner mbB**
**Patentanwälte · Rechtsanwälte**
**Sohnckestraße 12**
**81479 München (DE)**

(54) **SEPARATOR AND ELECTROCHEMICAL DEVICE INCLUDING THE SAME**

(57) Provided is a separator including: a substrate; an inorganic particle layer formed on at least any one surface of the substrate; and an adhesive layer formed on the at least one inorganic particle layer,
wherein when adhesive strength between a probe and a surface of the separator, which is measured at a stage temperature of x°C using the probe having a spring constant of 40 N/m, an average radius of 8 nm, and a scanning speed of 0.5 Hz, is Fx, F40 is 1 nN to 30 nN, and the separator satisfies the following Equation 1 :

[Equation 1]

$$F75/F40 \geq 5.$$

FIG. 1

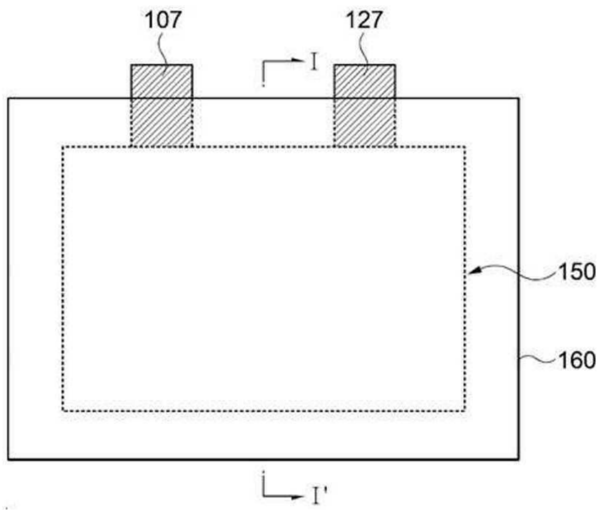


EP 4 742 416 A1

## Description

### TECHNICAL FIELD

The following disclosure relates to a separator and an electrochemical device including the same, and use of the separator.

### BACKGROUND

In recent years, there has been a rapidly growing interest in electrochemical devices used in mobile phones, laptops, electric vehicles, and other devices having electrochemical devices, and their energy storage technology. In particular, research on a separator, which is one of the main constituent elements determining the characteristics of a secondary battery which is the electrochemical device, is being actively performed. Since the separator is impregnated with an electrolyte and functions as an ion channel, it has a great influence on the physical properties in the performance of the secondary battery.

In this regard, a method of improving thermal resistance of a separator by mixing inorganic particles having high thermal resistance with a binder and coating a porous substrate with the mixture is known, and technology development research for sufficiently improving internal resistance while simultaneously securing adhesive strength between a separator and an electrode is in progress.

### SUMMARY

An embodiment of the present disclosure is directed to providing a separator in which adhesive strength of a surface of the separator measured using a probe of an atomic force microscope (AFM) capable of temperature adjustment is implemented in a specific range.

Another embodiment of the present disclosure is directed to providing an electrochemical device including the separator.

In one general aspect, a separator includes: a substrate; an inorganic particle layer formed on at least any one surface of the substrate; and an adhesive layer formed on the at least one inorganic particle layer,

wherein when adhesive strength between a probe and a surface of the separator measured at a stage temperature of x °C using the probe of an atomic force microscope is Fx,
F40 is 1 nN to 30 nN, and
the separator satisfies the following Equation 1:

[Equation 1]

$$F75/F40 \geq 5.$$

wherein Fx is measured at a spring constant of 40 N/m, an average radius of 8 nm, and a scanning speed of 0.5 Hz,
In an exemplary embodiment, the adhesive layer may include an acryl-based polymer binder.

In an exemplary embodiment, the adhesive layer may include a particulate polymer binder.

In an exemplary embodiment, the particulate polymer binder may be a particulate acryl-based polymer binder including a repeating unit derived from a compound represented by Chemical Formula 1:

[Chemical Formula 1]

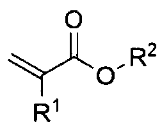

wherein

$R^1$ is hydrogen or a $C_{1-10}$ alkyl group; and
$R^2$ is hydrogen or a $C_{1-20}$ hydrocarbon group.

In an exemplary embodiment, the adhesive layer may comprise a particulate polymer binder having a core-shell structure.
In an exemplary embodiment, a glass transition temperature of the particulate polymer binder having the core-shell structure may satisfy at least one of the followings:

i) a glass transition temperature of the core may be 30°C to 70°C,
ii) a glass transition temperature of the shell of the particulate polymer binder may be 70°C to 110°C, and/or
iii) the glass transition temperature (Tg,c) of the core and the glass transition temperature (Tg,s) of the shell may satisfy the following Equation 2:

[Equation 2]

$$50°C \leq (Tg,c + Tg,s)/2 \leq 90°C.$$

In an exemplary embodiment, the adhesive layer may include a copolymer composed of a repeating unit derived from an acryl-based monomer; and a copolymer composed of a repeating unit derived from an acryl-based monomer and styrene.
In an exemplary embodiment, the adhesive layer may include a particulate polymer binder or a particulate acryl-based polymer binder having an average particle diameter (D50) of 400 nm to 800 nm.
In an exemplary embodiment, the F75 may be 40 nN to 300 nN.
In an exemplary embodiment, Equation 1 may satisfy $F75/F40 \geq 10$.
In an exemplary embodiment, the inorganic particle layer may include inorganic particles and the polymer binder.
In an exemplary embodiment, a weight ratio between the inorganic particles and the polymer binder is 90:10 to 99:1.
In an exemplary embodiment, the inorganic particle layer may include inorganic particles having an average particle diameter (D50) of 100 nm to 1500 nm.
In an exemplary embodiment, the inorganic particle layer may include first and second types of inorganic particles respectively exhibiting different particle size distributions, the first inorganic particles having an average particle diameter (D50) of 100 nm to 500 nm, and the second inorganic particles having an average particle diameter of 500 nm to 1500 nm.
In an exemplary embodiment, the inorganic particle layer may have a thickness of 0.5 μm to 3.0 μm.
In an exemplary embodiment, the adhesive layer may have a thickness of 0.05 μm to 2.0 μm.
In another general aspect, an electrochemical device includes a separator of the present disclosure, optionally the separator is faced with an anode electrode and a cathode electrode. In another general aspect, the electrochemical device is a secondary battery, preferably a lithium secondary battery. In another general aspect, use of a separator suppresses increase of the internal resistance in an electrochemical device as the number of charge/discharge cycles (N) increases, wherein the number of cycles (N) is 300 or more, when an internal resistance value of the electrochemical device is increased by 30% as compared with initial resistance before starting a charge/discharge cycle, wherein one charge/discharge cycle is set by charging from 2.5 V to 4.2 V at 0.5 C, and by discharging at 0.5 C to 2.5 V after discharging the electrochemical device to 2.5 V, and wherein C denotes C-rate (charging speed), for example 1 C is defined as one hour to fully charge the electrochemical device.
In an exemplary embodiment of the use, the separator used is in accordance with the separator disclosed herein.
In still another general aspect, an electrochemical device includes a separator including: a substrate; an inorganic particle layer formed on at least any one surface of the substrate; and an adhesive layer formed on the at least one inorganic particle layer,

wherein the number of cycles N is 300 or more, when an internal resistance value of the electrochemical device is increased by 30% as compared with initial resistance before starting a charge/discharge cycle, and
one charge/discharge cycle is set by charging from 2.5 V to 4.2 V at 0.5 V, and discharging at 0.5 C after discharging the electrochemical device to 2.5 V.

In an exemplary embodiment of the electrochemical device in the aforementioned aspect, the separator included

in the electrochemical device is in accordance with the separator disclosed herein.

Other features and aspects will be apparent from the following detailed description, the drawings, and the claims.

## BRIEF DESCRIPTION OF THE DRAWINGS

FIG. 1 is a schematic plan view of a secondary battery according to an exemplary embodiment.
FIG. 2 is a schematic cross-sectional view of a secondary battery according to an exemplary embodiment.
FIG. 3 is a simple schematic diagram of a cross section of a core-shell type polymer particle included in an adhesive layer of a separator according to an exemplary embodiment. In the present specification, a particle diameter of a core 200 refers to a length of a part marked with D in FIG. 3, and a thickness of a shell 100 refers to a length of a part marked with T in FIG. 3.
FIG. 4 shows a schematic structure of a separator 1 according to an exemplary embodiment and includes a substrate 10, an inorganic particle layer 20, and an adhesive layer 30.

[Detailed Description of Main Elements]

1: Separator
10: Substrate
20: Inorganic particle layer
30: Adhesive layer
100: Positive electrode
105: Positive electrode current collector
107: Positive electrode lead
110: Positive electrode active material layer
120: Negative electrode active material layer
125: Negative electrode current collector
127: Negative electrode lead
130: Negative electrode
140: Separator
150: Electrode assembly
160: Case
200: Particle diameter of core
300: Thickness of shell

## DETAILED DESCRIPTION OF EMBODIMENTS

Since the embodiments described in the present specification may be modified in many different forms, the technology according to an exemplary embodiment is not limited to the embodiments set forth herein. Furthermore, throughout the specification, unless otherwise particularly stated, the word "comprising", "including", "containing", "being provided with", or "having" does not mean the exclusion of any other constituent element, but rather means further inclusion of other constituent elements, and elements, materials, or processes which are not further listed are not excluded.

The numerical range used in the present specification includes all values within the range including the lower limit and the upper limit, increments logically derived from the form and spanning of a defined range, all double limited values, and all possible combinations of the upper limit and the lower limit in the numerical range defined in different forms. As an example, when it is defined that a content of a composition is 10% to 80% or 20% to 50%, it should be interpreted that a numerical range of 10% to 50% or 50% to 80% is also described in the specification of the present specification. Unless otherwise defined in the present specification, values which may be outside a numerical range due to experimental error or rounding off of a value are also included in the defined numerical range.

Hereinafter, unless otherwise particularly defined in the present specification, "about" may be considered as a value within 30%, 25%, 20%, 15%, 10%, 5%, 3%, 2%, 1%, or 0.5% of a stated value.

Unless otherwise particularly defined in the present specification, a "polymer" refers to a molecule which has a relatively high molecular weight and its structure may include multiple repetition of a unit derived from a low molecular weight molecule. In one embodiment, the polymer may be an alternating copolymer, a block copolymer, a random

copolymer, a graft copolymer, a gradient copolymer, a branched copolymer, a crosslinked copolymer, or a copolymer including all of them (for example, a polymer including more than one monomer). In another embodiment, the polymer may be a homopolymer (for example, a polymer including one monomer).

The term "alkyl group" used in the present specification refers to a radical of a straight chain or branched chain of a carbon saturated bond, and may be substituted by any substituent.

Hereinafter, the present disclosure will be described in detail (with reference to the accompanying drawings). However, it is only illustrative and the present disclosure is not limited to the specific embodiments which are illustratively described in the present disclosure.

An exemplary embodiment is to provide a separator in which adhesive strength between a surface of the separator and a probe measured using the probe of an atomic force microscope (AFM) capable of temperature adjustment of a stage is implemented in a specific range at a specific temperature. Specifically, a separator 1 according to an exemplary embodiment includes a substrate 10; an inorganic particle layer 20 formed on at least any one surface of the substrate; and an adhesive layer 30 formed on the at least one inorganic particle layer.

When adhesive strength between a probe and a surface of the separator measured at a stage temperature of x°C using the probe of an atomic force microscope (AFM) is Fx, F40 is 1 nN to 30 nN, and the separator satisfies the following Equation 1:

[Equation 1]

$$F75/F40 \geq 5.$$

The atomic force is measured at a spring constant of 40 N/m, an average radius of 8 nm, and a scanning speed of 0.5 Hz.

In the measurement of adhesive strength using a conventional probe having a large area, a measured adhesive strength value may be different depending on a concentration of a binder, but since a method of measuring adhesive strength of a surface of a separator using an AFM probe according to an exemplary embodiment uses a probe having a small area (radius of about 8 nm), the inherent adhesive strength of a binder included in the adhesive layer may be measured. In addition, since the temperature of a stage may be adjusted, a change in adhesive strength depending on temperature may be analyzed.

In an exemplary embodiment, the adhesive strength is adhesive strength between the surface of a binder included in the adhesive layer, that is, the outermost layer and the probe, and specifically, from a F/D (load(Y-axis)/distance(X-axis)) graph shown by tapping the surface of a binder included in the adhesive layer with a probe, adhesive strength occurring when the probe is separated from the surface of the separator may be calculated from the Y-axis of the F/D graph.

Since the separator including the adhesive layer according to an exemplary embodiment has an effect of effectively suppressing an internal resistance increase of a battery and of providing adhesive strength to an electrode by implementing the adhesive strength using AFM as described above, it is effective for improving battery performance. Specifically, since the battery including the separator according to an exemplary embodiment has a suppressed increase in internal resistance, the voltage drop of the battery is effectively suppressed, and thus, battery life may be increased. In addition, battery efficiency is increased by decreasing energy loss of the battery, and problems such as thermal runaway, electrolyte decomposition, fire, or explosion may be prevented by preventing heat generation due to increased internal resistance.

In an exemplary embodiment, the adhesive layer may be the surface intended to be facing an electrode of an electrochemical device such as a battery, that is, the adhesive layer may be the outermost layer of the separator, but is not necessarily limited thereto.

In an exemplary embodiment, the F40 may be 1 nN to 25 nN, 1 nN to 20 nN, 2 nN to 18 nN, 1 nN to 18 nN, or 3 nN to 15 nN. In an exemplary embodiment, the F75 may be 40 nN to 300 nN, 40 nN to 250 nN, 40 nN to 230 nN, 50 nN to 250 nN, 50 nN to 230 nN, 50 nN to 200 nN, or 60 nN to 200 nN. However, F40 and F70 are not necessarily limited to the above ranges, and are not particularly limited within a range in which their ratio of F75/F40 satisfies 5 or more.

In an exemplary embodiment, Equation 1 may satisfy $F75/F40 \geq 10$, $F75/F40 \geq 11$, $F75/F40 \geq 12$, or $F75/F40 \geq 13$. Herein, the upper limit of F75/F40 is not particularly limited, but, for example, may be 50 or less, 40 or less, 30 or less, 25 or less, or 20 or less.

In an exemplary embodiment, the adhesive layer may include a particulate polymer binder, an acryl-based polymer binder, or a particulate acryl-based polymer binder, and specifically, the particulate polymer binder or the particulate acryl-based polymer binder may have a core-shell structure, and it may be present in at least a portion of the surface of the adhesive layer. The core-shell structured polymer binder may be prepared by one or more methods selected

from stepwise emulsion polymerization, seeded polymerization, suspension polymerization, precipitation polymerization, interfacial polymerization, graft polymerization, and microemulsion polymerization.

In an exemplary embodiment, a glass transition temperature (Tg) of a polymer included in the core of the particulate polymer binder or the particulate acryl-based polymer binder may be 30°C to 70°C, 35°C to 70°C, 30°C to 65°C, 40°C to 70°C, or 40°C to 65°C. In an exemplary embodiment, the glass transition temperature of the polymer included in the shell of the particulate polymer binder or the particulate acryl-based polymer binder may be 70°C to 110°C, 70°C to 100°C, 75°C to 100°C, 75°C to 95°C, 80°C to 95°C, or 80°C to 90°C. Without being bound to a specific theory, the polymer included in the core and/or shell may effectively improve and/or enhance adhesive strength between the separator and an electrode in an electrode fusion process, by having the glass transition temperature.

In an exemplary embodiment, the glass transition temperature (Tg,c) of the polymer included in the core and the glass transition temperature (Tg,s) of the polymer included in the shell may satisfy the following Equation 2:

[Equation 2]

$$50°C \leq (Tg,c + Tg,s)/2 \leq 90°C.$$

Without being bound to a specific theory, the value of (Tg,c + Tg,s)/2 of Equation 2 may show a similar trend to an electrode fusion temperature of the separator according to an exemplary embodiment. The value of (Tg,c + Tg,s)/2 of Equation 2 and the electrode fusion temperature may satisfy 50°C to 90°C, 55°C to 85°C, 50°C to 80°C, 60°C to 90°C, or 60°C to 80°C. When the temperature range is satisfied, adhesive strength between the separator and the electrode may be effectively improved and/or enhanced in an electrode fusion process, and also, a blocking phenomenon in which separators are attached to each other during separator winding and a phenomenon in which separators are attached to each other in a storage or transportation process before the fusion process may be effectively prevented, and/or long-term storage may be allowed. In addition, the release of inorganic particles by blocking of the separator according to an exemplary embodiment is prevented by preventing the blocking phenomenon, and this is effective for prevention of battery performance degradation due to increased internal resistance. Therefore, it is effective for improving battery life characteristics and improving energy efficiency.

In an exemplary embodiment, the adhesive layer may include an acryl-based polymer binder. Specifically, the acryl-based polymer binder may include a repeating unit derived from (meth)acrylic acid and/or (meth)acrylate, and more specifically, may include a repeating unit derived from a compound represented by the following Chemical Formula 1.

In an exemplary embodiment, the adhesive layer may include both of a copolymer including a repeating unit derived from an acryl-based monomer, optionally included in the core; and a copolymer including a repeating unit derived from an acryl-based monomer and styrene, optionally included in the shell. Specifically, the adhesive layer may include both of a copolymer composed of a repeating unit derived from an acryl-based monomer, optionally included in the core; and a copolymer composed of a repeating unit derived from an acryl-based monomer and styrene, optionally included in the shell. In an exemplary embodiment, the acryl-based monomer may be independently of each other (meth)acrylic acid and/or (meth)acrylate, specifically the compound represented by Chemical Formula 1.

In an exemplary embodiment, the particulate polymer binder or the particulate acryl-based polymer binder may have an average particle diameter (D50) of 400 nm to 800 nm, 400 nm to 700 nm, 400 nm to 600 nm, 450 nm to 550 nm, or about 500 nm.

In an exemplary embodiment, when the particulate polymer binder or the particulate acryl-based polymer binder has a core-shell structure, the core may have an average particle diameter (D50, D of FIG. 1) of 320 nm to 780 nm, 320 nm to 680 nm, 320 nm to 530 nm, 350 nm to 500 nm, 400 nm to 500 nm, or about 450 nm, and the shell may have an average thickness (T of FIG. 1) of 20 nm to 80 nm, 30 nm to 60 nm, 40 nm to 60 nm, or about 50 nm. Without being bound to a specific theory, the core and the shell have the average particle diameter or the thickness in the above range, so that the adhesive layer may be evenly formed on the inorganic particle layer, and also, adhesive strength between the adhesive layer and an electrode may be more enhanced.

In an exemplary embodiment, a mass ratio between the core and the shell may be 5:5 to 9:1, 6:4 to 8:2, or about 7:3. Without being bound to a specific theory, the core and the shell satisfy the range, so that particles having uniform average particle diameter and/or average thickness may be formed, or the separator may be effectively adhered to the electrode at an electrode fusion temperature.

In an exemplary embodiment, the particulate polymer binder or the particulate acryl-based polymer binder may include a repeating unit derived from (meth)acryl acid and/or (meth)acrylate, or a copolymer thereof. In a particular embodiment, the particulate polymer binder or the particulate acryl-based polymer binder may include a repeating unit derived from the following Chemical Formula 1:

[Chemical Formula 1]

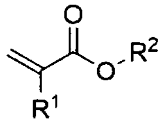

wherein

$R^1$ is hydrogen, a $C_{1-10}$ alkyl group, a $C_{1-3}$ alkyl group, a $C_{1-6}$ alkyl group, a $C_{1-5}$ alkyl group, a $C_{1-3}$ alkyl group, an ethyl group, or a methyl group; and/or
$R^2$ is hydrogen, a $C_{1-20}$ hydrocarbon group, a $C_{1-15}$ hydrocarbon group, a $C_{1-13}$ hydrocarbon group, or a $C_{1-10}$ hydrocarbon group.

The hydrocarbon group may include, for example, a straight chain or branched chain alkyl group, a cycloalkyl group unsubstituted or substituted by an alkyl group, and the cycloalkyl group may be a bridged ring, a spiro ring, or a fused ring, without limitation. Therefore, $R^2$ may be hydrogen, a $C_{1-20}$ alkyl group, a $C_{1-15}$ alkyl group, a $C_{1-12}$ alkyl group, a $C_{1-10}$ alkyl group, a $C_{1-8}$ alkyl group, a $C_{1-6}$ alkyl group, a $C_{1-5}$ alkyl group, a $C_{1-3}$ alkyl group, an ethyl group, or a $C_{5-20}$ cycloalkyl group, a $C_{5-15}$ cycloalkyl group, a $C_{6-20}$ cycloalkyl group, a $C_{6-15}$ cycloalkyl group, a $C_{5-12}$ cycloalkyl group, a $C_{5-10}$ cycloalkyl group, or a $C_{6-10}$ cycloalkyl group which is unsubstituted or substituted by one or more of a methyl group, or a $C_{1-5}$ alkyl group, a $C_{1-3}$ alkyl group, an ethyl group, or a methyl group.

Specifically, the particulate polymer binder or the particulate acryl-based polymer binder may include a repeating unit derived from one or more selected from the group consisting of methyl acrylate, ethyl acrylate, propyl acrylate, butyl acrylate, pentyl acrylate, hexyl acrylate, 1-ethylhexyl acrylate, 2-ethylhexyl acrylate, 3-ethylhexyl acrylate, isobornyl acrylate, methyl methacrylate, ethyl methacrylate, propyl methacrylate, 1-ethylhexyl methacrylate, 2-ethylhexyl methacrylate, and 3-ethylhexyl methacrylate, or may include a copolymer of one or more of the compounds selected from the above group. Without being bound to a specific theory, the acryl-based polymer binder is used in the core-shell particles satisfying the average particle diameter, the thickness, and/or the mass ratio described above and may be effective for implementing prevention of a battery internal resistance increase as well as electrode adhesive strength.

In an exemplary embodiment, the inorganic particle layer may include inorganic particles and the polymer binder.

In an exemplary embodiment, the inorganic particle layer may include inorganic particles having an average particle diameter (D50) of 100 nm to 1500 nm, 100 nm to 1200 nm, 200 nm to 1000 nm, 200 nm to 800 nm, 200 nm to 600 nm, 300 nm to 500 nm, or 200 nm to 400 nm.

In an exemplary embodiment, the inorganic particle layer may include first inorganic particles having an average particle diameter (D50) of 100 nm to 500 nm and second inorganic particles having an average particle diameter of 500 nm to 1500 nm. The first inorganic particles may have an average particle diameter (D50) of 200 nm to 400 nm, 250 nm to 350 nm, or about 300 nm. The average particle diameter (D50) of the second inorganic particles may be 500 nm to 1200 nm, 500 nm to 1000 nm, 600 nm to 1000 nm, 600 nm to 800 nm, or about 700 nm.

In an exemplary embodiment, when inorganic particles having two average particle diameters different from each other are used, though the weight ratio is not particularly limited, for example, the first inorganic particles and the second inorganic particles may be mixed at a weight ratio of 10:90 to 50:50, 20:80 to 50:50, 20:80 to 40:60, or about 30:70. However, this shows only an example, and the inorganic particles are not necessarily mixed at the weight ratio. Herein, the first inorganic particles and the second inorganic particles may be inorganic particles identical to or different from each other.

In an exemplary embodiment, the type of inorganic particles included in the inorganic particle layer is not particularly limited as long as the inorganic particles are known to be electrochemically stable. For example, any one or more of boehmite, $CeO_2$, $MgO$, $CaO$, $ZnO$, $Al_2O_3$, $TiO_2$, $BaTiO_3$, $HfO_2$, $SrTiO_3$, $SnO_2$, $NiO$, $ZrO_2$, $Y_2O_3$, and/or $SiC$ may be included.

In an exemplary embodiment, the polymer binder may be appropriately selected by an ordinary person skilled in the art disclosed in the present application from known binders according to the purpose and situation. In an exemplary embodiment, the polymer binder may be a water-based binder in a solution phase, and for example, may include any one or more selected from the group consisting of ester-based polymers, amide-based polymers, imide-based polymers, acryl-based polymers, acrylamide-based polymers, vinylalcohol-based polymers, acrylonitrile-based polymers, polyvinylalcohol-based polymers, fluorine-based polymers, and/or vinylpyrrolidone-based polymers. In an exemplary embodiment, the binder may include an acryl-based polymer. Otherwise, for example, the binder may include a polymer

prepared from any one or more monomers of (meth)acrylamide-based monomers, hydroxyl group-containing (meth) acryl-based monomers, and/or polyfunctional (meth)acrylamide-based monomers, and is not limited as long as the binder is used as a binder of the inorganic particle layer in which the inorganic particles formed on the surface of the porous substrate of the separator are connected to each other by the binder to form pores.

In an exemplary embodiment, the acrylamide-based polymer may include a repeating unit represented by the following Chemical Formula 2:

[Chemical Formula 2]

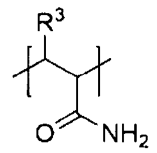

wherein $R^3$ is hydrogen, a $C_{1-10}$ alkyl group, a $C_{1-8}$ alkyl group, a $C_{1-5}$ alkyl group, or a $C_{1-3}$ alkyl group.

In an exemplary embodiment, the polymer binder may further include, for example, any one or two or more water-based polymers selected from the group consisting of polyvinyl alcohol (PVA), polyvinylidene fluoride (PVDF), carboxymethyl cellulose (CMC), styrene-butadiene rubber (SBR), polyacrylic acid (PAA), polyethylene glycol (PEG), polyacrylonitrile (PAN), polyvinylpyrrolidone (PVP), copolymers thereof.

In an exemplary embodiment, the binder (or a polymer included in the binder) may have a weight average molecular weight (Mw) of 10,000 g/mol to 2,000,000 g/mol, 50,000 g/mol to 2,000,000 g/mol, 50,000 g/mol to 1,000,000 g/mol, 50,000 g/mol to 500,000 g/mol, 50,000 g/mol to 300,000 g/mol, 100,000 g/mol to 300,000 g/mol, or about 120,000 g/mol, but these are only examples, and the weight average molecular weight may be appropriately selected according to the experimental conditions as long as the surface roughness range of the separator is satisfied. The weight average molecular weight may be measured by gel permeation chromatography (GPC).

In an exemplary embodiment, the glass transition temperature of the polymer binder may be, for example, 100°C to 180°C, 110°C to 160°C, 120°C to 150°C, or 130°C to 140°C, but is not necessarily limited thereto.

In an exemplary embodiment, a weight ratio between the inorganic particles and the polymer binder included in the inorganic particle layer may be 90:10 to 99:1, 92:8 to 99:1, 95:5 to 99:1, 96:4 to 98:2, or about 97:3.

In an exemplary embodiment, the thickness of the inorganic particle layer may be 0.5 μm to 3.0 um, 0.5 μm to 2.5 um, 1.0 um to 3.0 μm, 1.0 μm to 2.5 um, 1.0 μm to 2.0 μm, or about 1.5 μm. In an exemplary embodiment, the inorganic particle layer may be formed on one or both surfaces of a porous substrate.

In an exemplary embodiment, the thickness of the adhesive layer may be 0.05 μm to 2.0 μm, 0.1 μm to 2.0 μm, 0.1 μm to 1.5 μm, 0.1 μm to 1.0 μm, 0.2 μm to 0.8 μm, or about 0.5 μm. In an exemplary embodiment, the adhesive layer may be formed on any one inorganic particle layer, and may be formed on two inorganic particle layers formed on both surfaces of the substrate.

In an exemplary embodiment, the substrate may be a porous substrate, and is not limited as long as it is commonly used in the art. For example, it may be a woven fabric, a non-woven fabric, or a porous film. Specifically, the porous substrate may be polyolefins such as polyethylene and polypropylene, polyesters such as polyethylene terephthalate, polybutylene terephthalate, polyacetal, polyamide, polyimide, polycarbonate, polyetheretherketone, polyaryletherketone, polyetherimide, polyamideimide, polybenzimidazole, polyethersulfone, polyphenyleneoxide, cyclic olefin copolymer, polyphenylenesulfide, polyethylenenaphthalate, glass fiber, teflon, and/or polytetrafluoroethylene, and any two or more of them may be used.

In an exemplary embodiment, the thickness of the substrate is not particularly limited, and for example, may be 1 μm to 100 μm, 1 μm to 50 μm, 1 μm to 30 μm, 5 μm to 20 μm, 5 μm to 10 μm , or about 9 μm.

Another exemplary embodiment provides a method of manufacturing the separator.

The method of manufacturing a separator according to an exemplary embodiment includes: preparing a substrate; forming an inorganic particle layer using a composition for forming an inorganic particle layer on at least one surface of the substrate; and forming an adhesive layer using a composition for forming an adhesive layer on the at least one inorganic particle layer.

In an exemplary embodiment, the composition for forming an inorganic particle layer may be a slurry, and a solid content of the slurry may be, for example, 15 wt% to 40 wt%, 20 wt% to 40 wt%, 20 wt% to 35 wt%, or 20 wt% to 30 wt%.

In an exemplary embodiment, the step of forming an inorganic particle layer and/or an adhesive layer may include applying a composition and drying. Though the application is not particularly limited, it may use for example, roll coating,

spin coating, dip coating, bar coating, die coating, slit coating, or inkjet printing. The drying may be performed by drying by warm air, hot air, or low-humidity air, vacuum drying, irradiation with far infrared rays or electron beams, and other available drying methods to remove solvent. Since a drying temperature is not particularly limited, it may be appropriately adjusted depending on the experimental environment or purpose.

Another exemplary embodiment provides an electrochemical device including a separator including: a substrate; an inorganic particle layer formed on at least any one surface of the substrate; and an adhesive layer formed on the at least one inorganic particle layer,

wherein when adhesive strength between a probe and a surface of the separator measured at a stage temperature of x °C using the probe of an atomic force microscope (AFM) is Fx,
F40 is 1 nN to 30 nN, and
the separator satisfies the following Equation 1:

[Equation 1]

$$F75/F40 \geq 5.$$

Wherein Fx is measured at a spring constant of 40 N/m, an average radius of 8 nm, and a scanning speed of 0.5 Hz.

Since the above description of the separator may be identically applied to the description of the electrochemical device, redundant description will be omitted.

Another exemplary embodiment provides an electrochemical device having an effectively suppressed increase in internal resistance of the electrochemical device. Specifically, an exemplary embodiment provides an electrochemical device including a separator including: a substrate; optionally an inorganic particle layer formed on at least any one surface of the substrate; and an adhesive layer formed on the at least one inorganic particle layer,

wherein when the number of cycles when an internal resistance value of the electrochemical device is increased by 30% as compared with initial resistance before starting a charge/discharge cycle is N, N is 300 or more, and
one charge/discharge cycle is set as charging from 2.5 V to 4.2 V at 0.5 C, and discharging at 0.5 C to 2.5 V after discharging the electrochemical device to 2.5 V, wherein C is C-rate to charge and to discharge, for example 1 C is defined as one hour to fully charge the electrochemical device.

This means that since the separator disclosed herein has improved characteristics, it is possible to substantially increase the number of cycles (N) to 300 or more until a relevant or even critical level of increase of the internal resistance value of the electrochemical device is obtained, notably until an increase by 30% is obtained as compared with initial resistance before starting a charge/discharge cycle.

In an exemplary embodiment, the charge/discharge cycle N may be 400 or more, 450 or more, 500 or more, 550 or more, or 580 or more and 800 or less, 700 or less, 650 or less, or 600 or less.

Likewise, since the above description of the separator may be identically applied to the description of the electrochemical device, redundant description will be omitted.

The electrochemical device may be any known energy storage devices, and though it is not particularly limited, as a non-limiting example, it may be a secondary battery, specifically a lithium secondary battery. The lithium secondary battery according to an exemplary embodiment may include the separator described above between a positive electrode and a negative electrode. Herein, the positive electrode and the negative electrode may be used without limitation as long as they are commonly used in the lithium secondary battery.

The separator according to an exemplary embodiment is assembled by placing a negative electrode, the separator, and a positive electrode, when commonly used in a battery. Hereinafter, the constituent elements of the secondary battery according to the present disclosure will be further described.

[Positive electrode]

A positive electrode may include a positive electrode current collector and a positive electrode mixture layer placed on at least one surface of the positive electrode current collector.

(Positive electrode current collector)

The positive electrode current collector may include stainless steel, nickel, aluminum, titanium, or an alloy thereof. The positive electrode current collector may also include aluminum or stainless steel which is surface-treated with silver, carbon, nickel, or titanium. Though the thickness of the positive electrode current collector is not limited thereto, it may be, for example, 10 μm to 50 μm.

(Positive electrode material)

A positive electrode mixture layer may include a positive electrode active material. The positive electrode active material may include a compound which may reversibly intercalate and deintercalate lithium ions.

According to exemplary embodiments, the positive electrode active material may include a lithium-nickel metal oxide. The lithium-nickel metal oxide may further include at least one of cobalt (Co), manganese (Mn), and aluminum (Al).

In some exemplary embodiments, the positive electrode active material or the lithium-nickel metal oxide may include a layered structure or a crystal structure represented by the following Chemical Formula 3:

[Chemical Formula 3] $Li_xNi_aM_bO_{2+z}$

wherein $0.9 \leq x \leq 1.2$, $0.6 \leq a \leq 0.99$, $0.01 \leq b \leq 0.4$, and $-0.5 \leq z \leq 0.1$. As described above, M may include Co, Mn, and/or Al.

The chemical structure represented by Chemical Formula 3 shows a bonding relationship included in the layered structure or the crystal structure of the positive electrode active material, and it does not mean that other additional elements are excluded. For example, M includes Co and/or Mn, and Co and/or Mn may be provided as a main active element of the positive electrode active material with Ni. Chemical Formula 3 is provided for expressing the bonding relationship of the main active elements and should be understood as a formula covering introduction of an additional element and substitution.

In an exemplary embodiment, auxiliary elements which are added to the main active elements to enhance chemical stability of the positive electrode active material or the layered structure/crystal structure may be further included. The auxiliary element may be incorporated into the layered structure/crystal structure and form a bond, and in this case also, should be understood to be included in the range of the chemical structure represented by Chemical Formula 3.

The auxiliary element may include, for example, at least one of Na, Mg, Ca, Y, Ti, Hf, V, Nb, Ta, Cr, Mo, W, Fe, Cu, Ag, Zn, B, Al, Ga, C, Si, Sn, Sr, Ba, Ra, P, or Zr. The auxiliary element may act as, for example, an auxiliary active element which contributes to the capacity/output activity of the positive electrode active material with Co or Mn, like Al.

For example, the positive electrode active material or the lithium-nickel metal oxide may include a layered structure or a crystal structure represented by the following Chemical Formula 3-1:

[Chemical Formula 3-1] $Li_xNi_aM1_{b1}M2_{b2}O_{2+z}$

wherein M1 includes Co, Mn, and/or Al, M2 includes the auxiliary elements described above, and $0.9 \leq x \leq 1.2$, $0.6 \leq a \leq 0.99$, $0.01 \leq b1+b2 \leq 0.4$, and $-0.5 \leq z \leq 0.1$ are satisfied.

The positive electrode active material may further include a coating element or a doping element. For example, elements which are substantially identical or similar to the auxiliary elements described above may be used as a coating element or a doping element. For example, among the elements described above, a single element or a combination of two or more elements may be used as a coating element or a doping element.

The coating element or the doping element may be present on the surface of the lithium-nickel metal oxide particles, or may be penetrated through the surface of the lithium-nickel metal composite oxide particles and included in the combined structure represented by Chemical Formula 3 or Chemical Formula 3-1.

The positive electrode active material may include a nickel-cobalt-manganese (NCM)-based lithium oxide. In this case, an NCM-based lithium oxide having an increased nickel content may be used.

Ni may be provided as a transition metal related to the output and the capacity of a lithium secondary battery. Therefore, as described above, since a high-content (high-Ni) composition is adopted into the positive electrode active material, a high-capacity positive electrode and a high-capacity lithium secondary battery may be provided.

However, as the content of Ni increases, the long-term preservation stability and the life stability of the positive electrode or the secondary battery may be relatively reduced, and a side reaction with an electrolyte may be increased. However, according to exemplary embodiments, the life stability and the capacity retention properties may be improved by Mn while maintaining the electrical conductivity by including Co.

The content of Ni in the NCM-based lithium oxide (for example, the mole fraction of nickel of the total moles of nickel, cobalt, and manganese) may be 0.6 or more, 0.7 or more, or 0.8 or more. In some exemplary embodiment, the content of Ni may be 0.8 to 0.95, 0.82 to 0.95, 0.83 to 0.95, 0.84 to 0.95, 0.85 to 0.95, or 0.88 to 0.95.

In some exemplary embodiments, the positive electrode active material may include a lithium cobalt oxide-based active material, a lithium manganese oxide-based active material, a lithium nickel oxide-based active material, or a lithium iron phosphate (LFP)-based active material (for example, $LiFePO_4$).

In some exemplary embodiments, the positive electrode active material may include a Mn-rich-based active material having a chemical structure or crystal structure represented by Chemical Formula 4, a Li rich layered oxide (LLO)/over lithiated oxide (OLO)-based active material, or a Co-less-based active material:

[Chemical Formula 4] $p[Li_2MnO_{3]} \cdot (1-p)\ [Li_qJO_{2]}$

wherein $0<p<1$, $0.9\leq q\leq 1.2$, and J includes at least one element of Mn, Ni, Co, Fe, Cr, V, Cu, Zn, Ti, Al, Mg, and B.

(Method of manufacturing positive electrode)

For example, the positive electrode active material may be mixed into the solvent to prepare a positive electrode slurry. After coating the positive electrode current collector with the positive electrode slurry, drying and rolling may be performed to manufacture a positive electrode mixture layer. The coating process may be performed by a method such as gravure coating, slot die coating, multilayer simultaneous die coating, imprinting, doctor blade coating, dip coating, bar coating, and casting, but is not limited thereto. The positive electrode mixture layer may further include a binder, and may optionally further include a conductive material, a thickener, and the like. Herein, the binder and the conductive material are as described above.

(Positive electrode solvent)

A non-limiting example of the solvent used in the preparation of the positive electrode mixture may include N-methyl-2-pyrrolidone (NMP), dimethyl formamide, dimethyl acetamide, N,N-dimethylaminopropylamine, ethylene oxide, tetrahydrofuran, isobutyl isobutyrate, butyl butyrate, xylene, anisole, and the like.

(Positive electrode binder)

The binder may include a non-water-based binder and/or a water-based binder, or rubber-based binder and/or fluorine-based binder, and for example, may include polyvinylidene fluoride (PVDF), poly(vinylidene fluoride-co-hexafluoropropylene (PVDF-HFP), polyacrylonitrile, polymethylmethacrylate, acrylonitrile butadiene rubber (NBR), polybutadiene rubber (BR), styrene-butadiene rubber (SBR), and the like. In an exemplary embodiment, a PVDF-based binder may be used as a positive electrode binder.

(Positive electrode conductive material)

The conductive material may be added for increasing conductivity of the positive electrode mixture layer and/or mobility of lithium ions or electrons. For example, the conductive material may be a linear conductive material and/or a dot-shaped conductive material, and for example, may include carbon-based conductive materials such as graphite, carbon black, acetylene black, ketjen black, graphene, carbon nanotubes, vaporgrown carbon fiber (VGCF), carbon fiber, and carbon nanofiber, and/or metal-based conductive materials including tin, tin oxide, titanium oxide, perovskite materials such as $LaSrCoO_3$ and $LaSrMnO_3$, and the like, but is not limited thereto.

(Positive electrode thickener/ dispersant)

If necessary, the positive electrode mixture may further include a thickener and/or a dispersant and the like. As an exemplary embodiment, the positive electrode mixture may include a thickener such as carboxymethyl cellulose (CMC).

[Negative electrode]

The negative electrode may include a negative electrode current collector and a negative electrode mixture layer placed on at least one surface of the negative electrode current collector.

(Negative electrode current collector)

A non-limiting example of the negative electrode current collector may include a copper foil, a nickel foil, a stainlesssteel foil, a titanium foil, a nickel foam, a copper foam, a polymer substrate coated with a conductive metal, and the

like. Though the thickness of the negative electrode current collector is not limited thereto, it may be, for example, 10 to 50 μm.

(Negative electrode material)

The negative electrode mixture layer may include a negative electrode active material. As the negative electrode active material, a material capable of adsorbing or desorbing lithium ions may be used. For example, the negative electrode active material may be a carbonaceous material such as crystalline carbon, amorphous carbon, carbon composite, and carbon fiber; lithium metal; lithium alloy; a silicon (Si)-containing material, a tin (Sn)-containing material, or other carbon containing intercalated materials.
An example of the amorphous carbon may include hard carbon, soft carbon, coke, mesocarbon microbead (MCMB), mesophase pitchbased carbon fiber (MPCF), and other amorphous carbon for lithium intercalation materials.
An example of the crystalline carbon may include graphitebased carbon such as natural graphite, artificial graphite, graphitized coke, graphitized MCMB, and graphitized MPCF.
The lithium metal may include a pure lithium metal or a lithium metal on which a protective layer for suppressing dendrite growth and other protective material for the dendrite is formed. In an exemplary embodiment, a lithium metal-containing layer which is deposited or coated on a negative electrode current collector may be used as a negative electrode active material layer. In an exemplary embodiment, a lithium thin film layer may be used as a negative electrode active material layer.
An element included in the lithium alloy may include aluminum, zinc, bismuth, cadmium, antimony, silicon, lead, tin, gallium, indium, or other metal alloy material for lithium intercalation.
The silicon-containing material may provide more increased capacity characteristics. The silicon-containing material may include Si, $SiO_x$ ($0<x<2$), metal-doped $SiO_x$ ($0<x<2$), a siliconcarbon composite, and other Si-containing material for lithium intercalation. The metal may include lithium and/or magnesium, and the metal-doped $SiO_x$ ($0<x<2$) may include metal silicate.

(Method of manufacturing negative electrode)

For example, the negative electrode active material may be mixed into the solvent to prepare a negative electrode slurry. After coating/depositing the negative electrode current collector with the negative electrode slurry, drying and rolling may be performed to manufacture a negative electrode mixture layer. The coating process may be performed by a method such as gravure coating, slot die coating, multilayer simultaneous die coating, imprinting, doctor blade coating, dip coating, bar coating, and casting, but is not limited thereto. The negative electrode mixture layer may further include a binder, and may optionally further include a conductive material, a thickener, and other additives.
In some exemplary embodiments, the negative electrode may include a negative electrode active material layer in a lithium metal form formed by a deposition/coating process.

(Negative electrode solvent)

A non-limiting example of the solvent for a negative electrode mixture may include water, pure water, deionized water, distilled water, ethanol, isopropanol, methanol, acetone, n-propanol, t-butanol, isobutyl isobutyrate, butyl butyrate, xylene, anisole, and other solvents for the negative electrode.

(Negative electrode binder/ conductive material/ thickener)

As the binder, the conductive material, and the thickener, the materials described above which may be used in the manufacture of a positive electrode may be used.
In some exemplary embodiments, rubber-based binder such as a styrene-butadiene rubber (SBR)-based binder, carboxymethyl cellulose (CMC), a polyacrylic acid-based binder, a poly(3,4-ethylenedioxythiophene) (PEDOT)-based binder, and other viscous adjusting agents may be used as a negative electrode binder.

[Separator]

A separator may be interposed between the positive electrode and the negative electrode. The separator may be formed so that electrical short circuit between the positive electrode and the negative electrode is prevented and an ion flow occurs. According to an exemplary embodiment, the thickness of the separator may be 10 μm to 20 μm, but the present disclosure is not limited thereto.
For example, the separator may include a porous polymer film or a porous non-woven fabric. The porous polymer

film may include a polyolefin-based polymer such as an ethylene polymer, a propylene polymer, an ethylene/butene copolymer, an ethylene/hexene copolymer, and an ethylene/methacrylate copolymer. The porous non-woven fabric may include high-melting point glass fiber, polyethylene terephthalate fiber, and the like. The separator may include ceramic-based materials. For example, inorganic particles may be coated on the polymer film or dispersed in the polymer film to improve heat resistance.

The separator may have a single layer or multilayer structure including the polymer film and/or the non-woven fabric described above.

[Electrode assembly]

According to exemplary embodiments, the positive electrode, the negative electrode, and the separator may be repeatedly disposed to form an electrode assembly. In some exemplary embodiments, the electrode assembly may be a winding type, a stacking type, a zigzag (z)-folding type, or a stack-folding type.

[Electrolytic solution]

A lithium secondary battery may be defined by housing the electrode assembly in a case with an electrolyte. According to exemplary embodiments, a nonaqueous electrolytic solution may be used as the electrolyte.

(Lithium salt/ organic solvent)

A nonaqueous electrolyte solution includes a lithium salt as an electrolyte and an organic solvent, the lithium salt is represented by, for example, $Li^+X^-$, and an example of an anion ($X^-$) of the lithium salt may include $F^-$, $Cl^-$, $Br^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$, $(CF_3CF_2SO_2)_2N^-$, and other available lithium salts for the electrochemical device.

The organic solvent has sufficient solubility of the lithium salt or the additive, and may include an organic compound having no reactivity in a battery. The organic solvent may include, for example, at least one of carbonate-based solvents, ester-based solvents, ether-based solvents, ketone-based solvents, alcohol-based solvents, and aprotic solvents. An example of the organic solvent may include propylene carbonate (PC), ethylene carbonate (EC), butylene carbonate, diethyl carbonate (DEC), dimethyl carbonate (DMC), ethyl methyl carbonate (EMC), methyl propyl carbonate, ethyl propyl carbonate, dipropyl carbonate, vinylene carbonate, methyl acetate (MA), ethyl acetate (EA), n-propylacetate (n-PA), 1,1-dimethylethyl acetate (DMEA), methyl propionate (MP), ethyl propionate (EP), fluoroethyl acetate (FEA), difluoroethyl acetate (DFEA), trifluoroethyl acetate (TFEA), dibutyl ether, tetraethylene glycol dimethyl ether (TEGDME), diethylene glycol dimethyl ether (DEGDME), tetrahydrofuran (THF), 2-methyltetrahydrofuran, ethyl alcohol, isopropyl alcohol, dimethylsulfoxide, acetonitrile, dimethoxyethane, sulfolane, gamma-butyrolactone, propylene sulfite, and other organic solvents for the electrochemical device. These may be used alone or in combination of two or more.

(Additive)

The nonaqueous electrolytic solution may further include an additive. The additive may include, for example, cyclic carbonate-based compounds, fluorine-substituted carbonate-based compounds, sultone-based compounds, cyclic sulfate-based compounds, cyclic sulfite-based compounds, phosphate-based compounds, and borate-based compounds.

The cyclic carbonate-based compound may include vinylene carbonate (VC), vinylethylene carbonate (VEC), or other cyclic carbonate-based compounds for the electrochemical device.

The fluorine-substituted carbonate-based compound may include fluoroethylene carbonate (FEC) and other fluorine-substituted carbonate compounds for the electrochemical device.

The sultone-based compound may include 1,3-propane sultone, 1,3-propene sultone, 1,4-butane sultone, and other sultone compounds for the electrochemical device.

The cyclic sulfate-based compound may include 1,2-ethylene sulfate, 1,2-propylene sulfate, and other cyclic sulfate compounds.

The cyclic sulfite-based compound may include ethylene sulfite, butylene sulfite, and other cyclic sulfite-based compounds.

The phosphate-based compound may include lithium difluoro bis-oxalato phosphate, lithium difluoro phosphate, and other phosphate-based compounds.

The borate-based compound may include lithium bis(oxalate) borate and the other borate-based compounds.

[Solid electrolyte]

In some exemplary embodiment, a solid electrolyte may be used instead of the nonaqueous electrolytic solution described above. In this case, the lithium secondary battery may be manufactured in an all-solid-state battery form.

The solid electrolyte may include a sulfide-based electrolyte. As a non-limiting example, the sulfide-based electrolyte may include $Li_2S$-$P_2S_5$, $Li_2S$-$P_2S_5$-LiCl, $Li_2S$-$P_2S_5$-LiBr, $Li_2S$-$P_2S_5$-LiCl-LiBr, $Li_2S$-$P_2S_5$-$Li_{20}$, $Li_2S$-$P_2S_5$-$Li_{20}$-LiI, $Li_2S$-$SiS_2$, $Li_2S$-$SiS_2$-LiI, $Li_2S$-$SiS_2$-LiBr, $Li_2S$-$SiS_2$-LiCl, $Li_2S$-$SiS_2$-$B_2S_3$-LiI, $Li_2S$-$SiS_2$-$P_2S_5$-LiI, $Li_2S$-$B_2S_3$, $Li_2S$-$P_2S_5$-$Z_mS_n$ (m and n are positive numbers, and Z is Ge, Zn, or Ga), $Li_2S$-$GeS_2$, $Li_2S$-$SiS_2$-$Li_3PO_4$, $Li_2S$-$SiS_2$-$Li_pMO_q$, (p and q are positive numbers, and M is P, Si, Ge, B, Al, Ga, or In), $Li_{7-x}PS_{6-x}Cl_x$ ($0 \leq x \leq 2$), $Li_{7-x}PS_{6-x}Br_x$ ($0 \leq x \leq 2$), $Li_{7-x}PS_{6-x}I_x$ ($0 \leq x \leq 2$), and other sulfide electrolytes. These may be used alone or in combination of two or more.

In an exemplary embodiment, the solid electrolyte may include, for example, an oxide-based amorphous solid electrolyte such as $Li_{20}$-$B_2O_3$-$P_2O_5$, $Li_{20}$-$SiO_2$, $Li_{20}$-$B_2O_3$, and $Li_{20}$-$B_2O_3$-ZnO.

[Cell structure]

For example, electrode tabs (positive electrode tab and negative electrode tab) may protrude from the positive electrode current collector and the negative electrode current collector and extend to one side of a case, respectively. The electrode tabs may be connected to electrode leads (positive electrode lead and negative electrode lead) which are fused with the one side of the case and extended or exposed to the outside of the case. For example, a pouch-type case, an angular case, a cylindrical case, a coin-type case, and other cases to extend the electrical connections may be used.

Hereinafter, the examples will be further described with reference to the specific experimental examples. It is apparent to those skilled in the art that the examples and the comparative examples included in the experimental examples only illustrate an exemplary embodiment and do not limit the appended claims, and various modifications and alterations of the examples may be made within the range of the scope of the present disclosure, and these modifications and alterations will fall within the appended claims.

**<Test method>**

1. Glass transition temperature (Tg, unit: °C)

A heat capacity of a sample according to heating at a rate of 10°C/min in a range of -100°C to 250°C, using a differential scanning calorimetry (DSC) was measured, and a temperature of a middle point of an interval where the heat capacity of the sample rapidly changed was set as a glass transition temperature.

2. Fusion temperature of electrode (unit: °C)

Two negative electrode sheets and two positive electrode sheets were alternately placed at regular intervals on each side of the separators prepared in the Examples and Comparative Examples. The separator was then folded in a Z-stacking manner so that the alignment between the negative and positive electrodes matched. After setting the temperature of the press machine, a pressure of 1 MPa was applied for 30 seconds. When the stacked separator was unfolded after pressing, if all of the negative and positive electrodes adhered to the separator, the corresponding temperature was defined as the electrode fusion temperature.

3. Analysis of adhesive strength (Fx) (peak force QNM (quantitative nanomechanical), unit: nN)

Adhesive strength between a probe and the surface of a separator was measured using an atomic force microscope (AFM, Bruker) equipped with a stage capable of temperature adjustment, and the adhesive strength at a temperature of x°C was represented as Fx. Specifically, the separator was placed on a stage at a temperature of x, and from a F/D (load(Y-axis)/distance(X-aixs)) graph shown by tapping the separator with a probe (RTESPA-300) having a spring constant of 40 N/m, an average radius of 8 nm, and a scanning speed of 0.5 Hz, the adhesive strength occurring when the probe was separated from the surface of the separator was calculated from the Y-axis of the F/D graph. Specifically, in the following examples, adhesive strength at a point where there were binder particles on the surface of the separator adhesive layer was measured, and the measurement was performed a total of 10 times, and the average value thereof was calculated. Adhesive strengths F40 and F75 when the temperature of the stage was 40°C and 75°C, respectively, and F75/F40 was shown after rounding to the second decimal place.

4. Measurement of the number of cycles at which internal resistance was increased

The number of cycles when internal resistance value was increased by 30% as compared with initial resistance before starting the charge/discharge cycle was defined as the number of cycles at which the internal resistance was increased, and the measurement was performed using the battery assembled as follows:

Manufacture of positive electrode: 92 wt% of a lithium cobalt composite oxide ($LiCoO_2$) as a positive electrode active material, 4 wt% of carbon black as a conductive material, and 4 wt% of polyvinylidene fluoride (PVdF) as a binder were added to N-methyl-2-pyrrolidone (NMP) as a solvent to prepare a positive electrode mixture slurry. The prepared slurry was applied on an aluminum (Al) thin film having a thickness of 30 μm and dried at a temperature of 120°C, and roll-pressing was performed to manufacture a positive electrode having a thickness of 140 μm.

Manufacture of negative electrode: 96 wt% of graphite carbon, 3 wt% of PVdF as a binder, and 1 wt% of carbon black as a conductive material were added to NMP as a solvent to prepare a negative electrode mixture slurry. The prepared slurry was applied on an copper (Cu) thin film having a thickness of 20 μm, dried at 120 °C, and roll-pressed to manufacture a negative electrode having a thickness of 150 μm.

A pouch type battery was assembled by stacking the manufactured separator between eleven positive electrode sheets and twelve negative electrode sheets, and an electrolytic solution of ethylene carbonate (EC)/ ethyl methyl carbonate (EMC)/ dimethyl carbonate(DMC) = 3:5:2 (volume ratio) in which 1M lithium hexafluorophosphate ($LiPF_6$) was dissolved was injected into each assembled battery to manufacture a lithium secondary battery having a capacity of 2 Ah.

The assembled battery was charged to 4.2 V CC-CV (constant current-constant voltage), using a charge/-discharge cycle device, and discharged to 2.5 V. The charging and discharging were measured by performing charging from 2.5 V to 4.2 V at 0.5 C and discharging at 0.5 C to 2.5 V 600 times, wherein C is C-rate or charging speed; for example 1 C is defined as one hour to fully charge the assembled battery. The initial internal resistance was measured before the cycle began, the internal resistance was measured every charge/discharge cycle, and the number of cycles N when the internal resistance value was increased by 30% as compared with the initial resistance was determined as the number of cycles at which the internal resistance was increased. That is, when the number of cycles N, at which such a 30% increase is obtained, is 300 or more, the separator and thus the electrochemical device - exemplified as a battery - passes the quality control of achieving an improved effect of suppressing an internal resistance increase.

5. Measurement of thickness (unit: μm)

The thickness of a 10-layer porous substrate was measured with Mitutoyo (ID-C112X), and divided into 10 to obtain the thickness of the separator. The substrate was coated with an inorganic particle layer, the thickness was measured by the above method, and a value obtained by subtracting the thickness of the porous substrate therefrom was determined as the thickness of the inorganic particle layer. The inorganic particle layer was coated with an adhesive layer, the thickness was measured by the above method, and a value obtained by subtracting the thicknesses of the porous substrate and the inorganic particle layer therefrom was determined as the thickness of the adhesive layer.

**<Example 1>**

A coating slurry having a solid content concentration of 25 wt% including 29 wt% of boehmite particles having an average particle diameter (D50) of 300 nm, 68 wt% of boehmite particles having an average particle diameter (D50) of 700 nm, and 3 wt% of polyacrylamide was prepared. The coating slurry was applied on both surfaces of a porous polyethylene substrate having a thickness of 9 μm, respectively, and then evaporated to form inorganic particle layers each having a thickness of 1.5 μm.

An acryl-based particle dispersion (concentration: 3 wt%) having a core-shell structure and an average particle diameter (D50) of 500 nm was applied on the inorganic particle layers formed on both surfaces, respectively, and then evaporated to form adhesive layers each having a thickness of 0.5 μm, thereby manufacturing a separator. At this time, the acryl-based particles having a core-shell structure included a copolymer formed by mixing methyl methacrylate and n-butyl acrylate at a weight ratio of 70:30 in a core (average particle diameter: 450 nm) and included a copolymer formed by mixing ethyl acrylate, methyl methacrylate, and styrene at a weight ratio of 12:30:58 in a shell, and the weight ratio between the core and the shell was 7:3.

**<Example 2>**

A separator was manufactured in the same manner as in Example 1, except that as the acryl-based particles (average particle diameter: 500 nm) having a core-shell structure included in the adhesive layer, particles including a copolymer formed by mixing methyl methacrylate, n-butyl acrylate, and ethyl acrylate at a weight ratio of 75:10:15 in a core (average particle diameter: 450 nm) and including a copolymer formed by mixing ethyl acrylate, methyl methacrylate, and

styrene at a weight ratio of 10:50:40 in a shell were used.

**<Example 3>**

A separator was manufactured in the same manner as in Example 1, except that when the inorganic particle layer was formed, 97 wt% of boehmite particles having an average particle diameter (D50) of 300 nm were used as inorganic particles.

**<Comparative Example 1>**

A separator was manufactured in the same manner as in Example 1, except that as the acryl-based particles (average particle diameter: 500 nm) having a core-shell structure included in the adhesive layer, particles including a copolymer formed by mixing methyl methacrylate, n-butyl acrylate, and ethyl acrylate at a weight ratio of 75:10:15 in a core (average particle diameter: 450 nm) and including a copolymer formed by mixing methyl methacrylate and styrene at a weight ratio of 50:50 in a shell were used.

**<Comparative Example 2>**

A separator was manufactured in the same manner as in Example 1, except that as the acryl-based particles (average particle diameter: 500 nm) having a core-shell structure included in the adhesive layer, particles including a copolymer formed by mixing methyl methacrylate, n-butyl acrylate, and ethyl acrylate at a weight ratio of 40:20:40 in a core (average particle diameter: 450 nm) and including a copolymer formed by mixing ethyl acrylate, and styrene at a weight ratio of 30:70 in a shell were used.

**<Comparative Example 3>**

A separator was manufactured in the same manner as in Example 1, except that as the acryl-based particles (average particle diameter: 500 nm) having a core-shell structure included in the adhesive layer, particles including a copolymer formed by mixing methyl methacrylate and n-butyl acrylate at a weight ratio of 75:25 in a core (average particle diameter: 450 nm) and including a copolymer formed by mixing methyl benzyl acrylate and styrene at a weight ratio of 10:90 in a shell were used.

**<Comparative Example 4>**

A separator was manufactured in the same manner as in Example 1, except that as the acryl-based particles (average particle diameter: 500 nm) having a core-shell structure included in the adhesive layer, particles including a copolymer formed by mixing methyl methacrylate and n-butyl acrylate at a weight ratio of 60:40 in a core (average particle diameter: 450 nm) and including a copolymer formed by mixing methyl methacrylate and styrene at a weight ratio of 30:70 in a shell were used.

**<Comparative Example 5>**

A coating slurry having a solid content concentration of 25 wt% including 29 wt% of boehmite particles having an average particle diameter (D50) of 300 nm, 68 wt% of boehmite particles having an average particle diameter (D50) of 700 nm, and 3 wt% of polyacrylamide was prepared. The coating slurry was applied on a porous polyethylene substrate having a thickness of 9 μm and then evaporated to form an inorganic particle layer, thereby manufacturing a separator.

The glass transition temperature (Tg), the fusion temperature to an electrode, the adhesive strengths (F40, F75) at a temperature of 40°C and 75°C and their ratio, and the number of cycles at which the internal resistance was increased of each of the copolymers included in the core and the shell of the acryl-based particles having the core-shell structure included in the adhesive layer of the separators manufactured in the examples and the comparative examples were analyzed, and are shown in the following Table 1.

[Table 1]

| | Example 1 | Example 2 | Example 3 | Comparative Example 1 | Comparative Exatr$^{p1}$e2 | Comparative Example 3 | Comparative Example4 | Comparative Example5 |
|---|---|---|---|---|---|---|---|---|
| Tg(core/shell,°C) | 41/80 | 61/90 | 41/80 | 61/113 | 10/50 | 50/90 | 20/100 | - |
| Fusion temperature (°C | 60 | 75 | 60 | 90 | 30 | 70 | 60 | - |
| F40 (nN) | *15* | 3 | *15* | 3 | 120 | 3 | 3 | 3 |
| F75 (nN) | 200 | 60 | 200 | 10 | 250 | 14 | 150 | 5 |
| F75/F40 | 13.3 | 20 | 13.3 | 33 | 2.1 | 4.7 | *50* | 1.6 |
| Intemal resistance increase cycle | 580 | 590 | 580 | 200 | 120 | 150 | 200 | 195 |

As confirmed in Table 1, the adhesive strength F40 measured using an AFM probe was 30 nN or less, and simultaneously, in the examples having F75/F40 of 5 or more, the internal resistance increase phenomenon in the examples was excellently suppressed improving the battery performance as compared with the comparative examples.

When the fusion temperature is within the range of 50 to 90 °C, the internal resistance increase is also suppressed as shown in the examples. Further, even though the fusion temperature is within the range as, the internal resistance increase is not properly suppressed when Tg,c is too low in the comparative example 4 or when Tg,s is too high in comparative example 1. As for comparative example 3, the fusion temperature, Tg,s and Tg, c are within the range of the invention, however, F75/F40 is out of the range of Equation 1, and eventually the internal resistance increase was not effectively suppressed.

The separator according to an exemplary embodiment includes an adhesive layer on an inorganic particle layer, and simultaneously, implements adhesive strength on the surface of the separator measured using a probe of an atomic force microscope in a specific range, thereby securing adhesive strength between a separator and an electrode, and effectively reducing internal resistance of a battery.

The above description is only an example to which the principle of the present disclosure is applied, and other constitutions may be further included without departing from the scope of the present disclosure. Hereinabove, though an implementation has been described in detail by the examples and the experimental examples, the scope of an implementation is not limited to specific examples, and should be construed by the appended claims.

## Claims

1. A separator comprising: a substrate; an inorganic particle layer formed on at least any one surface of the substrate; and an adhesive layer formed on the at least one inorganic particle layer,

   wherein when adhesive strength between a probe and a surface of the separator measured at a stage temperature of x°C using the probe of an atomic force microscope (AFM) is Fx,
   F40 is 1 nN to 30 nN, and
   the separator satisfies the following Equation 1:

   [Equation 1]

   $$F75/F40 \geq 5,$$

   wherein Fx is measured at a spring constant of 40 N/m, an average radius of 8 nm, and a scanning speed of 0.5 Hz.

2. The separator of claim 1, wherein the adhesive layer includes an acryl-based polymer binder.

3. The separator of claim 1 or 2, wherein the adhesive layer includes a particulate polymer binder, preferably wherein the particulate polymer binder is a particulate acryl-based polymer binder including a repeating unit derived from a compound represented by Chemical Formula 1:

   [Chemical Formula 1]

   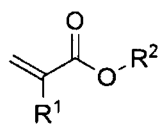

   wherein

   $R^1$ is hydrogen or a $C_{1-10}$ alkyl group; and
   $R^2$ is hydrogen or a $C_{1-20}$ hydrocarbon group.

4. The separator of any one of the preceding claims, wherein the adhesive layer comprises a particulate polymer binder having a core-shell structure.

5. The separator of claim 4, wherein a glass transition temperature of the particulate polymer binder having the core-shell

structure satisfies at least one of the followings:

i) a glass transition temperature of the core in the particulate polymer binder is 30°C to 70°C,
ii) a glass transition temperature of the shell of the particulate polymer binder is 70°C to 110°C, and/or
iii) a glass transition temperature (Tg,c) of the core and the glass transition temperature (Tg,s) of the shell satisfy the following Equation 2:

[Equation 2]

$$50°C \leq (Tg,c + Tg,s)/2 \leq 90°C.$$

**6.** The separator of any one of the preceding claims,

wherein the adhesive layer includes a copolymer composed of a repeating unit derived from an acryl-based monomer; and
a copolymer composed of a repeating unit derived from an acryl-based monomer and styrene.

**7.** The separator of any one of the preceding claims, wherein the adhesive layer includes a particulate acryl-based polymer binder having an average particle diameter (D50) of 400 nm to 800 nm.

**8.** The separator of any one of the preceding claims, wherein the F75 is 40 nN to 300 nN, and/or
wherein Equation 1 satisfies $F75/F40 \geq 10$.

**9.** The separator of any one of the preceding claims, wherein the inorganic particle layer includes inorganic particles and a polymer binder, optionally wherein a weight ratio between the inorganic particles and the polymer binder is 90:10 to 99:1.

**10.** The separator of any one of the preceding claims, wherein the inorganic particle layer includes inorganic particles having an average particle diameter (D50) of 100 nm to 1500 nm.

**11.** The separator of any one of the preceding claims, wherein the inorganic particle layer includes first and second types of inorganic particles respectively exhibiting different particle size distributions, the first inorganic particles having an average particle diameter (D50) of 100 nm to 500 nm, and the second inorganic particles having an average particle diameter (D50) of 500 nm to 1500 nm.

**12.** The separator of any one of the preceding claims, wherein the inorganic particle layer has a thickness of 0.5 μm to 3.0 um, and/or
wherein the adhesive layer has a thickness of 0.05 μm to 2.0 μm.

**13.** An electrochemical device comprising a separator according to any one of the preceding claims,
optionally wherein the separator is faced with an anode electrode and a cathode electrode.

**14.** An electrochemical device of claim 13, wherein the electrochemical device is a secondary battery, preferably a lithium secondary battery.

**15.** Use of a separator for suppressing increase of the internal resistance in an electrochemical device as the number of charge/discharge cycles N increases, wherein the number of cycles N is 300 or more, when an internal resistance value of the electrochemical device is increased by 30% as compared with initial resistance before starting a charge/discharge cycle,

wherein one charge/discharge cycle is set by charging from 2.5 V to 4.2 V at 0.5 C, and by discharging at 0.5 C to 2.5 V after discharging the electrochemical device to 2.5 V, and
wherein C denotes the C-rate or charging speed, 1 C being defined as one hour to fully charge the electrochemical device.

FIG. 1

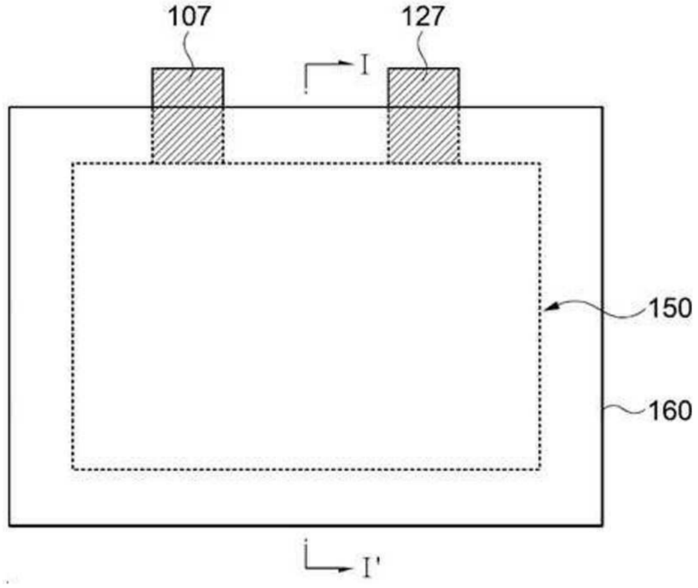


FIG. 2

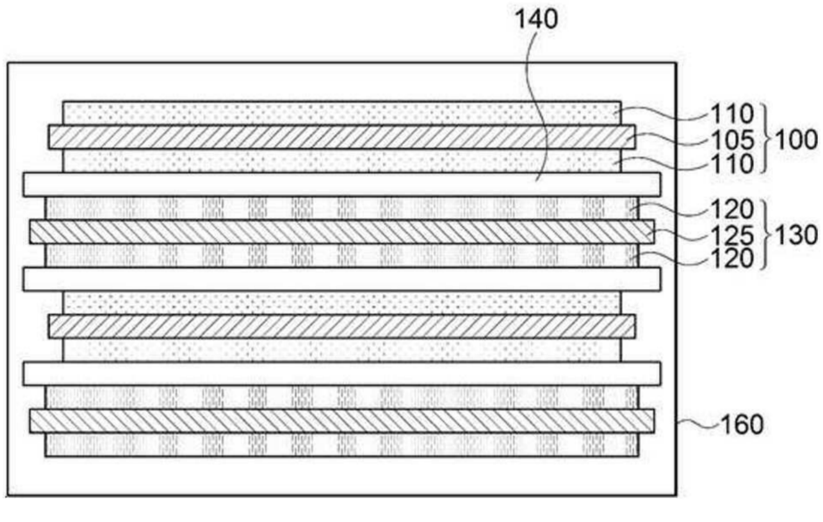

FIG. 3

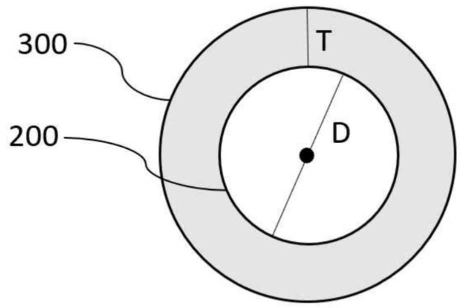


FIG. 4

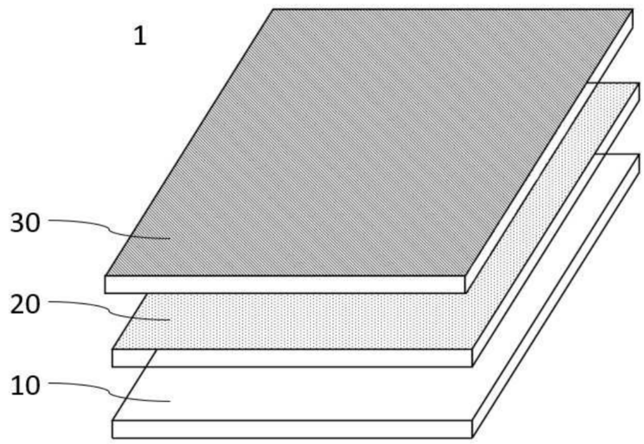

Europäisches Patentamt
European Patent Office
Office européen des brevets

# EUROPEAN SEARCH REPORT

Application Number
EP 25 21 0266

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2023/219304 A1 (SAMSUNG SDI CO LTD [KR]) 16 November 2023 (2023-11-16)<br>* example 1 *<br>----- | 1-15 | INV.<br>H01M50/443<br>H01M50/451<br>H01M50/46<br>H01M50/489 |
| X | WO 2023/219306 A1 (SAMSUNG SDI CO LTD [KR]) 16 November 2023 (2023-11-16)<br>* example 1 *<br>----- | 1-15 | |
| A | WO 2023/219307 A1 (SAMSUNG SDI CO LTD [KR]) 16 November 2023 (2023-11-16)<br>* the whole document *<br>----- | 1-15 | |

TECHNICAL FIELDS SEARCHED (IPC)

H01M

The present search report has been drawn up for all claims

2

| Place of search | Date of completion of the search | Examiner |
|---|---|---|
| The Hague | 27 February 2026 | Saad-Guermeche, S |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO.

EP 25 21 0266

This annex lists the patent family members relating to the patent documents cited in the above-mentioned European search report. The members are as contained in the European Patent Office EDP file on
The European Patent Office is in no way liable for these particulars which are merely given for the purpose of information.

27-02-2026

| Patent document cited in search report | Publication date | Patent family member(s) | Publication date |
| --- | --- | --- | --- |
| WO 2023219304 A1 | 16-11-2023 | CN 119174044 A | 20-12-2024 |
| | | EP 4525181 A1 | 19-03-2025 |
| | | KR 20230157793 A | 17-11-2023 |
| | | US 2025202052 A1 | 19-06-2025 |
| | | WO 2023219304 A1 | 16-11-2023 |
| WO 2023219306 A1 | 16-11-2023 | CN 118922996 A | 08-11-2024 |
| | | EP 4525179 A1 | 19-03-2025 |
| | | KR 20230158165 A | 20-11-2023 |
| | | US 2025202051 A1 | 19-06-2025 |
| | | WO 2023219306 A1 | 16-11-2023 |
| WO 2023219307 A1 | 16-11-2023 | CN 118975035 A | 15-11-2024 |
| | | EP 4525182 A1 | 19-03-2025 |
| | | KR 20230157792 A | 17-11-2023 |
| | | US 2025219248 A1 | 03-07-2025 |
| | | WO 2023219307 A1 | 16-11-2023 |

EPO FORM P0459

For more details about this annex : see Official Journal of the European Patent Office, No. 12/82